# EUROPEAN PATENT APPLICATION

(11) **EP 4 697 573 A1**
(43) Date of publication of application: **18.02.2026**
(21) Application number: 24788442.2
(22) Date of filing: 28.02.2024
(51) Int. Cl.: H02K 21/14

(54) **ROTARY ELECTRIC MACHINE**

(30) Priority: 13.04.2023 JP 2023065892
(71) Applicant: THK CO., LTD., Minato-ku Tokyo 108-8506 (JP)
(72) Inventor: IWASHIRO Sho, Tokyo 108-8506 (JP); NISHIDE Tetsuhiro, Tokyo 108-8506 (JP); KANESHIGE Hiroshi, Tokyo 108-8506 (JP); TSUNOFURI Masahiro, Tokyo 108-8506 (JP); HAKIAI Koji, Tokyo 108-8506 (JP); KIRINO Sana, Tokyo 108-8506 (JP)
(74) Representative: Prinz & Partner mbB
(86) International application number: PCT/JP2024/007340
(87) International publication number: WO 2024/214412

(57) **Abstract**

A rotating electric machine is provided that has a variable flux mechanism allowing relative movement between a stator and a rotor, and that is small in thickness and diameter and allows a cooling path to be readily provided. The rotating electric machine includes: a rotary shaft; a rotor that includes a permanent magnet, provides torque to the rotary shaft, and is attached to the rotary shaft to be movable along an axis; a moving mechanism that moves the rotor along the axis; a stator that includes a coil and is disposed with a radial gap between the stator and an outer circumference of the rotor; and a rotation prevention device that prevents rotation of the moving mechanism. The moving mechanism includes: a screw shaft member that rotates together with the rotor and has an outer circumference with a helical screw groove and an inner circumference through which the rotary shaft is located; and a screw nut member screwed into the screw groove on the screw shaft member. The rotation prevention device includes: a guide on the screw shaft member; and a slider on a housing.

## Description

### TECHNICAL FIELD

The present invention relates to a rotating electric machine, and particularly to a rotating electric machine to be used as an in-wheel motor included in a wheel of an automobile.

### BACKGROUND ART

In recent years, rotating electric machines have been known that are capable of adjusting output at low and high rotational speeds to achieve output characteristics suitable for different rotational speeds. Such rotating electric machines vary in structure. An exemplary conventional rotating electric machine includes: a stator; a rotor coaxially rotatable relative to the stator; and a moving device that changes the relative position of the stator to the rotor along the axis. An armature coil and a core are provided in the stator, and a magnet is provided to face the core.

In such a rotating electric machine, at low rotational speeds, a moving mechanism moves the stator along the axis to increase the facing area between the stator and the rotor. This increases the effective magnetic flux passing through the stator, thereby achieving high torque. At high rotational speeds, the moving mechanism moves the stator to reduce the facing area between the stator and the rotor. This reduces the effective magnetic flux passing through the stator, thereby achieving high-speed rotation.

### Citation List

### Patent Literature

Patent Literature 1: Japanese Patent Laid-Open No. 2008-141900

### DISCLOSURE OF THE INVENTION

### PROBLEMS TO BE SOLVED BY THE INVENTION

Unfortunately, using conventional rotating electric machines as in-wheel motors poses issues such as an increased unsprung weight that affects ride comfort, and reduced passenger space caused by the suspension geometry being offset toward the vehicle interior due to the motors occupying space in the suspension system. In view of these issues, there has been a need for a thin and small-diameter rotating electric machine.

In a conventional rotating electric machine, the mechanism for moving the stator along the axis is provided radially around the rotary shaft. This makes it difficult to reduce the diameter of the rotating electric machine itself.

In addition, in a conventional rotating electric machine, the relative movement between the stator and the rotor along the axis is achieved by moving the stator disposed inside the rotor. However, when the stator coil needs to be cooled with a coolant, providing a path for the coolant in the stator moving along the axis is difficult.

The present invention has been made to solve the above problems, and an object thereof is to provide a rotating electric machine that has a variable flux mechanism allowing relative movement between a stator and a rotor, and that is small in thickness and diameter and allows a cooling path to be readily provided.

### MEANS FOR SOLVING THE PROBLEMS

A rotating electric machine according to the present invention for solving the above problems includes: a rotary shaft; a rotor that includes a permanent magnet, provides torque to the rotary shaft, and is attached to the rotary shaft to be movable along an axis; a moving mechanism that moves the rotor along the axis; a stator that includes a coil and is disposed with a radial gap between the stator and an outer circumference of the rotor; and a rotation prevention device that prevents rotation of the moving mechanism. The moving mechanism includes: a screw shaft member that rotates together with the rotor and has an outer circumference with a helical screw groove and an inner circumference through which the rotary shaft is located; and a screw nut member screwed into the screw groove on the screw shaft member. The rotation prevention device includes: a guide on the screw shaft member; and a slider on a housing.

### EFFECT OF THE INVENTION

The rotating electric machine according to the present invention includes: the stator that includes a coil and is disposed with a radial gap between the stator and the outer circumference of the rotor; and the rotation prevention device that prevents rotation of the moving mechanism. The moving mechanism includes: the screw shaft member that rotates together with the rotor and has the outer circumference with a helical screw groove and the inner circumference through which the rotary shaft is located; and the screw nut member screwed into the screw groove on the screw shaft member. The rotation prevention device includes: the guide on the screw shaft member; and the slider on the housing. This enables preventing the rotation of the screw shaft member while guiding the axial movement of the screw shaft member, achieving a thin and small-diameter rotating electric machine.

Furthermore, the rotating electric machine according to the present invention is what is called an inner-rotor type rotating electric machine with a variable flux mechanism, in which the stator includes a coil and is disposed with a radial gap between the stator and the outer circumference of the rotor. The stator is therefore not moved along the axis, allowing a cooling path to be readily provided when the stator needs to be cooled.

### BRIEF DESCRIPTION OF DRAWINGS

[FIG. 1] FIG. 1 is a diagram of a rotating electric machine according to an embodiment of the present invention, used as an in-wheel motor.
[FIG. 2] FIG. 2 is a front view of the rotating electric machine according to the embodiment of the present invention.
[FIG. 3] FIG. 3 is a cross-sectional view along line A-A in FIG. 2.
[FIG. 4] FIG. 4 is an enlarged view of area B in FIG. 3.
[FIG. 5] FIG. 5 is a perspective view for describing a rotation prevention device of the rotating electric machine according to the embodiment of the present invention.
[FIG. 6] FIG. 6 is a cross-sectional view for describing operations of a variable flux mechanism of the rotating electric machine according to the embodiment of the present invention.

### MODE FOR CARRYING OUT THE INVENTION

An embodiment of a rotating electric machine according to the present invention will be described below with reference to the drawings. The following embodiment is not intended to limit the invention set forth in the claims, and not all the combinations of features described in the embodiment are essential to the solution provided by the invention.

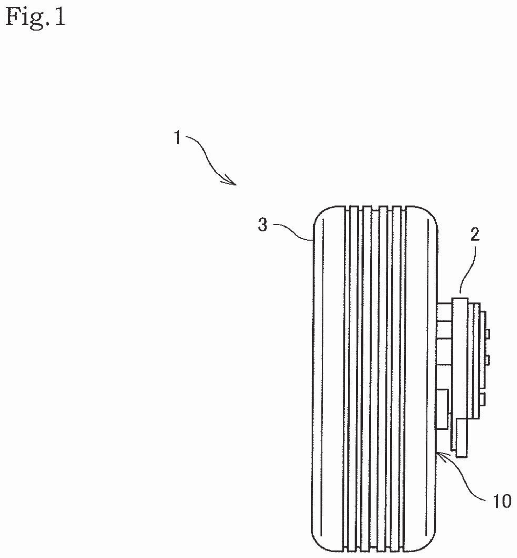

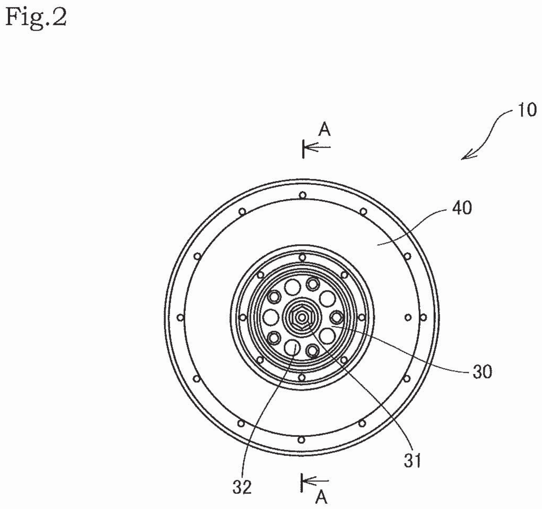

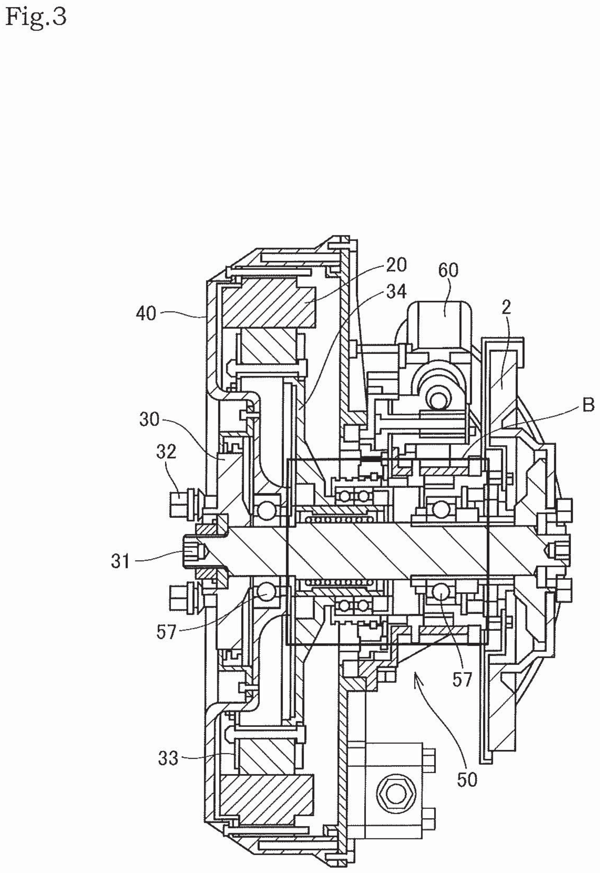

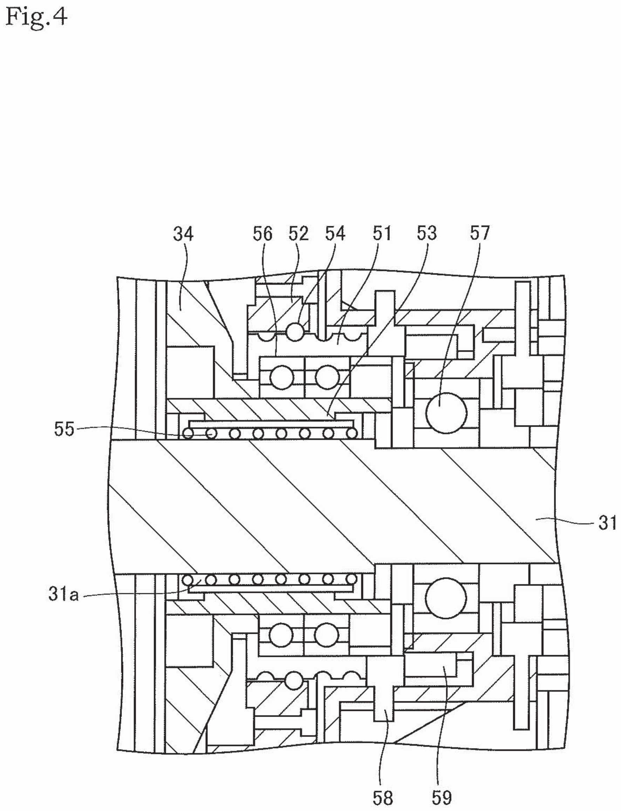

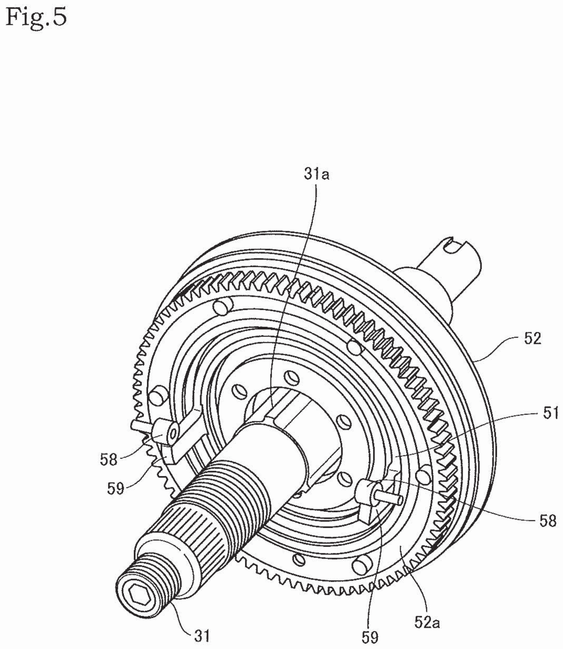

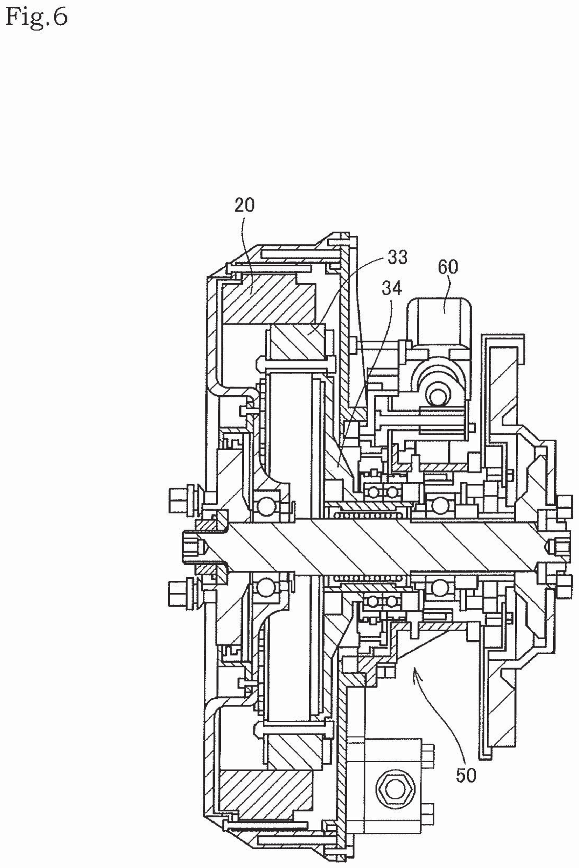

FIG. 1 is a diagram of a rotating electric machine according to an embodiment of the present invention, used as an in-wheel motor. FIG. 2 is a front view of the rotating electric machine according to the embodiment of the present invention. FIG. 3 is a cross-sectional view along line A-A in FIG. 2. FIG. 4 is an enlarged view of area B in FIG. 3. FIG. 5 is a perspective view for describing a rotation prevention device of the rotating electric machine according to the embodiment of the present invention. FIG. 6 is a cross-sectional view for describing operations of a variable flux mechanism of the rotating electric machine according to the embodiment of the present invention.

As shown in FIG. 1, a rotating electric machine 10 according to an embodiment is preferably used as what is called an in-wheel motor incorporated in a wheel assembly 1 of a vehicle such as an automobile. The wheel assembly 1 has a tire 3 attached to a wheel (not shown), and the rotating electric machine 10 is included in the wheel. A brake disc 2 is attached to a rotary shaft 31 of the rotating electric machine 10.

As shown in FIGS. 2 and 3, the rotating electric machine 10 includes a housing 40, which houses a stator 20 and a rotor 30 rotatable relative to the stator 20. The stator 20 is disposed with a radial gap between the stator 20 and the outer circumference of the rotor 30. The rotor 30 includes the rotary shaft 31, and bolts 32 that rotate together with the rotary shaft 31. The wheel (not shown) of the wheel assembly 1 is attached to the bolts 32.

The stator 20 includes a circumferentially arranged armature coil formed by winding a wire around a stator core (not shown). The rotor 30 includes a rotor body 34 attached to a moving mechanism 50, and a rotor core 33 disposed to face the outer circumference of the rotor body 34 and to face the stator 20. The rotor core 33 includes permanent magnets (not shown) disposed along the circumference. The stator 20 also includes a cooling device (not shown) for cooling.

As shown in FIGS. 4 and 5, the moving mechanism 50 includes: a spline nut member 53 fitted into spline grooves 31a formed on the rotary shaft 31 along the axis so that the member is movable along the axis; a screw shaft member 51 attached to the outer circumference of the spline nut member 53 with a bearing 56 in between; and a screw nut member 52 rotatably attached to the screw shaft member 51.

The rotary shaft 31 is a member that rotates around the axis together with the rotor 30, and rotatably supported by rotary bearings 57 attached to the housing 40.

The screw shaft member 51 has a hollow structure with a helical screw groove on its outer circumference and a hollow in its center through which components such as the bearing 56, the spline nut member 53, and the rotary shaft 31 can be located. The screw shaft member 51 has guides 59 extending along the axis. The screw nut member 52 consists of multiple (e.g., two) pieces that are axially aligned. Note that the screw nut member 52 may be formed as a single piece, rather than axially aligned pieces.

The guides 59 preferably consist of a pair of guides located along the horizontal direction. The guides 59 implement a rotation prevention device together with cam followers 58, which are sliders attached to the housing 40 to guide the guides 59.

The screw nut member 52 has a nut-side screw groove on its inner circumference, corresponding to the screw groove. Rolling elements 54 are helically arranged between the screw groove and the nut-side screw groove. A gear 52a meshing with the drive motor 60 is attached to an end of the screw nut member 52.

The spline nut member 53 is a cylindrical member with nut-side spline grooves corresponding to the spline grooves 31a. The rotor body 34 is attached to the outer circumference of the spline nut member 53. Rolling elements 55 are arranged along the axis between the spline grooves 31a and the nut-side spline grooves.

Each cam follower 58 is a shafted bearing, which has a shaft fixed to the housing 40 and a bearing rotatably attached to the shaft. The outer circumference of the bearing contacts the upper surface of the corresponding guide 59 described above to guide the axial movement of the screw shaft member 51 along the guide 59. The guides 59 preferably consist of a pair of guides located along the direction parallel to the ground; in this manner, the guides 59 and the cam followers 58 can appropriately load impacts received by the vehicle from the ground.

Now, operations of the rotating electric machine 10 according to the embodiment will be described. When current is supplied to the coil in the stator 20 in the state shown in FIG. 3, the rotor 30 rotates relative to the stator 20 due to the interaction with the magnetic field generated by the permanent magnets disposed in the rotor 30.

Inserting the rotor 30 into the stator 20 to the deepest extent maximizes the facing area between the stator 20 and the rotor 30, resulting in the rotating electric machine 10 with high-torque, low-rotational-speed output characteristics. These output characteristics are most suitable for cases such as vehicle startup, where high torque is required at a low speed.

Furthermore, the counter-electromotive force increases in the above state, enabling efficient power generation during deceleration in which power supply to the stator 20 is stopped to brake the wheel assembly 1. The motor can thus function as an efficient regenerative brake.

Now, operations of the moving mechanism 50 will be described. Because the rotor body 34 is attached to the spline nut member 53, the rotation of the rotor body 34 is transmitted to the rotary shaft 31 via the spline nut member 53 and the spline grooves 31a. In contrast, the bearing 56 between the spline nut member 53 and the screw shaft member 51 blocks the rotation of the rotor 30 from being transmitted to the screw shaft member 51.

The drive motor 60 is driven to rotate the gear 52a attached to the screw nut member 52, causing the axial movement of the screw shaft member 51. At this point, the spline nut member 53, attached to the rotary shaft 31 via the spline grooves 31a, moves along the axis together with the rotor body 34.

Here, as shown in FIG. 6, pulling the rotor 30 axially away from the stator 20 minimizes the facing area between the rotor core 33 of the rotor 30 and the stator 20. The counter-electromotive force then decreases, resulting in the rotating electric machine 10 with low-torque, high-rotational-speed output characteristics. Thus, in this state where the rotor 30 is pulled away from the stator 20, the output characteristics are most suitable for high-speed driving that does not require torque.

Note that, because the moving mechanism 50 allows stepless movement of the rotor 30 along the axis, the position of the rotor 30 can be adjusted to achieve required output characteristics by controlling the rotational speed of the drive motor 60.

Thus, the rotating electric machine 10 according to the embodiment configured as above has a variable flux mechanism provided by the moving mechanism 50. The guides 59 extending along the axis are provided on the hollow screw shaft member 51 that slides along the axis of the rotary shaft 31. The sliding of the hollow screw shaft member 51 is guided by the guides 59 along sliders implemented by the cam followers 58; the two guides 59 are guided from above by the respective cam followers 58. This achieves a variable flux mechanism that prevents the rotation of the screw shaft member 51 having the guides 59. The cam followers 58 guide the respective guides 59 from the same direction (from above), preventing the rotation of the screw shaft member 51 in the forward and reverse directions around the axis. In this manner, the rotation of the screw shaft member is more effectively prevented. Note that the cam followers 58 may guide the guides 59 not from above but from some other direction, such as from below, such that the cam followers 58 guide the pair of guides 59 from the same direction.

The rotating electric machine 10 according to the embodiment can block the vehicle load in the following manner. The bearing 56 between the spline nut member 53 and the screw shaft member 51 blocks the driving torque and the braking torque, and the spline nut member 53 blocks the impact load in the axial direction. This can prevent damage to the rotor core while reducing the sizes of the components of the variable-flux moving mechanism 50.

The components of the moving mechanism 50 can be arranged along the axis, preventing an increase in the radial dimension of the rotating electric machine 10. Using the screw nut member 52 for the moving mechanism 50 and using the cam followers 58 for the sliders can further reduce the machine size.

Rolling guides with rolling elements are adopted at locations involving sliding, such as between the cam followers 58 and the guides 59 and between the rotary shaft 31 and the spline nut member 53. This can minimize resistance, preventing a size increase and aging deterioration of the drive motor 60.

The rotating electric machine 10 according to the embodiment has the variable flux mechanism in which the stator 20 that requires cooling is fixed and the rotor 30 is moved along the axis. This allows a cooling path to be readily provided.

The above-described rotating electric machine 10 according to the present embodiment has the rolling elements 54 and 55 between the screw shaft member 51 and the screw nut member 52 and between the spline grooves 31a and the spline nut member 53, and has the rolling guides such that the cam followers 58 guide the guides 59. Alternatively, these parts may be implemented as sliding guides in which the members are directly in sliding contact without the interposition of rolling elements. Furthermore, although the above-described guides 59 are provided as a pair of guides located along the horizontal direction, the guides 59 may be two or more guides located, for example, at regular intervals along the circumference of the screw shaft member 51. In addition, although the above-described guides 59 are provided as a pair (i.e., two guides) on the screw shaft member 51, two or more guides 59 may be provided on the screw shaft member 51. In that case, at least two of the guides 59 are preferably guided by the cam followers 58 from the same direction, and are preferably symmetrically located around the axis. It is apparent from the description in the claims that embodiments with such modifications or improvements may also be within the technical scope of the present invention.

### REFERENCE NUMERALS

3 tire, 10 rotating electric machine, 20 stator, 30 rotor, 31 rotary shaft, 31a spline groove, 40 housing, 50 moving mechanism, 51 screw shaft member, 52 screw nut member, 52a gear, 53 spline nut member, 58 cam follower, 59 guide, 60 drive motor

## Claims

1. A rotating electric machine comprising:
a rotary shaft;
a rotor that comprises a permanent magnet, provides torque to the rotary shaft, and is attached to the rotary shaft to be movable along an axis;
a moving mechanism that moves the rotor along the axis;
a stator that comprises a coil and is disposed with a radial gap between the stator and an outer circumference of the rotor; and
a rotation prevention device that prevents rotation of the moving mechanism, wherein
the moving mechanism comprises: a screw shaft member that rotates together with the rotor and has an outer circumference with a helical screw groove and an inner circumference through which the rotary shaft is located; and a screw nut member screwed into the screw groove on the screw shaft member, and
the rotation prevention device comprises: a guide on the screw shaft member; and a slider on a housing.

2. The rotating electric machine according to claim 1, wherein
an outer circumference of the rotary shaft has a spline groove extending along the axis, and
the rotor comprises a spline nut member that engages with the spline groove.

3. The rotating electric machine according to claim 2, wherein
the spline nut member is insertable into the inner circumference of the screw shaft member.

4. The rotating electric machine according to claim 1, wherein
the moving mechanism comprises a drive motor that provides torque to the screw nut member.

5. The rotating electric machine according to claim 4, wherein
an outer circumference of the screw nut member has teeth that mesh with the drive motor.

6. The rotating electric machine according to claim 1, wherein
a tire is disposed on an outer circumferential side of the stator, the tire being attached to a wheel that is rotatable together with the rotor.
